# EUROPÄISCHE PATENTANMELDUNG

(11) **EP 1 770 413 A1**
(43) Veröffentlichungstag der Anmeldung: **04.04.2007**
(21) Anmeldenummer: 06018160.9
(22) Anmeldetag: 31.08.2006
(51) Int. Cl.: G01V 8/14

(54) **Reflexionslichtschranke**

(30) Priorität: 28.09.2005 DE 102005046554
(71) Anmelder: SICK AG, 79183 Waldkirch (DE)
(72) Erfinder: Dreher, Hubertus, 79215 Elzach (DE); Schuler, Werner, 79261 Bleibach (DE); Hauptmann, Axel, 79183 Waldkirch (DE); Jacob, Stefan, 79211 Denzlingen (DE)
(74) Vertreter: Patentanwälte Westphal, Mussgnug & Partner

(57) **Zusammenfassung**

Die Erfindung betrifft eine Reflexionslichtschranke mit auf einer Seite des Übertragungsbereichs (20) angeordnetem Lichtsender (3) und Lichtempfänger (4) und einem auf der anderen seite angeordneten Reflektor, welcher den Polarisationszustand des Lichtes bei Reflexion ändert, wobei sowohl zwischen dem Lichtsender (3) und dem Reflektor als auch zwischen dem Lichtempfänger (4) und dem Reflektor wenigstens ein optisches Element (1, 2, 7, 7a, 7b) und ein Polarisationsfilter (11, 12) angeordnet sind und wobei die Polarisationsebenen (13, 14) der beiden Polarisationsfilter (11, 12) gegeneinander gekreuzt sind, wobei wenigstens eines der beiden Polarisationsfilter (11, 12) mit optisch transparentem Material um- und/oder hinterspritzt wird und wobei das optisch transparente Material das wenigstens eine optische Element (1, 2, 7, 7a, 7b) bildet.

## Beschreibung

Die Erfindung betrifft eine Reflexionslichtschranke gemäß dem Oberbegriff des Patentanspruchs 1.

Reflexionslichtschranken werden dazu verwendet, Gegenstände oder Personen, die in den Überwachungsbereich der Reflexionslichtschranke gelangen, zu erkennen. An einer Seite des Überwachungsbereichs sind ein Lichtsender und auf der gleichen Seite ein Lichtempfänger angeordnet, während sich auf der anderen Seite des Überwachungsbereichs ein Reflektor befindet. Das vom Lichtsender ausgesandte Strahlenbündel wird am Reflektor in den Lichtempfänger reflektiert, der das einfallende Strahlenbündel detektiert. Befindet sich ein Gegenstand oder eine Person in dem Überwachungsbereich der Reflexionslichtschranke, wird das Strahlenbündel unterbrochen. Gelangen reflektierende Gegenstände in den Überwachungsbereich, können diese Gegenstände das ausgesandte Strahlenbündel unter entsprechenden Bedingungen ebenfalls in den Lichtempfänger reflektieren, wodurch der Lichtempfänger ein einfallendes Strahlenbündel detektiert und die Lichtschranke nicht anspricht. Um auch derartige reflektierende Gegenstände detektieren zu können, sind sowohl an dem Lichtsender als auch an dem Lichtempfänger wenigstens ein optisches Element und ein Polarisationsfilter angeordnet, wobei die Polarisationsebenen der beiden Polarisationsfilter gegeneinander gekreuzt sind. Der Reflektor ist dabei so ausgebildet, dass er den Polarisationszustand des Lichtes bei der Reflexion ändert, z. B. die Polarisationsebene dreht oder das Licht depolarisiert. Das ausgesandte strahlenbündel wird somit bei Durchgang durch den vor dem Lichtsender angeordneten Polarisationsfilter in eine Vorzugsrichtung polarisiert, wobei bei Reflexion in dem Reflektor diese Polarisationsrichtung geändert wird. Das zweite Polarisationsfilter, welches vor dem Lichtempfänger angeordnet ist, kann jedoch nur Licht passieren, welches genau die von diesem Polarisationsfilter geforderte Polarisation aufweisen. Dies ist aber nur dann der Fall, wenn das ausgesandte Strahlenbündel an dem Reflektor reflektiert wird, der die Polarisationsrichtung des Lichtes zumindest teilweise in die Polarisationsebene des zweiten Polarisationsfilters dreht. Wird das ausgesandte Strahlenbündel dagegen an einem reflektierenden Gegenstand reflektiert, welcher in den Überwachungsbereich gelangt, so ändert sich seine Polarisation praktisch nicht und da reflektierte Strahlenbündel wird von dem zweiten Polarisationsfilter am Eintritt in den Lichtempfänger gehindert. Eine derartige Reflexionslichtschranke ist beispielsweise in der DE 28 24 583 C3 beschrieben.

Bei dieser Reflexionslichtschranke ist der Montageprozess der Reflexionslichtschranke aufwendig, da in dem Strahlengang an dem Lichtsender und dem Lichtempfänger je ein Polarisationsfilter und wenigstens ein optisches Element montiert und exakt ausgerichtet werden müssen. Des weiteren sind die Polarisationsfilter feuchtigkeitsempfindlich, wobei bei zu hoher Feuchtigkeit die Filterwirkung nachlässt und die Reflexionslichtschranke nicht mehr voll funktionstüchtig ist.

Die Aufgabe der Erfindung besteht daher darin, eine Reflexionslichtschranke bereitzustellen, welche einfacher zu montieren ist.

Die Aufgabe der Erfindung wird gelöst durch eine Reflexionslichtschranke mit den kennzeichnenden Merkmalen des Patentanspruchs 1.

Vorteilhafte Ausgestaltungen und Weiterbildungen der Erfindung sind in den Unteransprüchen angegeben.

Erfindungsgemäß wird wenigstens eines der beiden Polarisationsfilter mit optisch transparentem Material um- und/oder hinterspritzt, wobei das optisch transparente Material das wenigstens eine optische Element bildet. Durch das Hinterspritzen des Polarisationsfilters mit optisch transparentem Material, welches das optische Element bildet, wird das Polarisationsfilter direkt auf dem optischen Element angeordnet und bildet mit diesem eine Einheit, wodurch die Montage dahingehend vereinfacht wird, dass statt zwei Elementen nur noch ein Element montiert werden muss. Insbesondere ist das Polarisationsfilter durch die Anordnung in der Spritzgussform ohne weitere Montage richtig zu dem entsprechenden optischen Element ausgerichtet. Weiterhin können Bauteile, insbesondere Haltevorrichtungen eingespart werden, da nur ein Element in einer entsprechenden Haltevorrichtung montiert werden muss, wodurch die Herstellungskosten gesenkt werden. Wird weiterhin das Polarisationsfilter auch an seinem Umfangsrand umspritzt, werden dadurch zusätzlich die empfindlichen, insbesondere feuchtigkeitsempfindlichen, Kanten des Polarisationsfilters umschlossen und vor Beschädigungen, insbesondere vor dem Eindringen durch Feuchtigkeit, geschützt.

Vorzugsweise werden beide Polarisationsfilter mit optisch transparentem Material um- und/oder hinterspritzt, wodurch die Montage weiter vereinfacht und die Herstellungskosten weiter gesenkt werden.

Bei einer besonders bevorzugten Ausführungsform der Erfindung sind beide Polarisationsfilter gemeinsam mit optisch transparentem Material um- und/oder hinterspritzt. Die beiden Polarisationsfilter sind somit gemeinsam in einem Spritzgussteil angeordnet, welches beide für das jeweilige Polarisationsfilter nötigen optischen Elemente bildet. Einerseits wird dadurch der Herstellungsprozess weiter vereinfacht. Der besondere Vorteil dieser Ausführungsform liegt jedoch darin, dass die Polarisationsfilter bereits im Herstellungsprozess entsprechend zueinander ausgerichtet werden und keine aufwändige Ausrichtung bei der Montage vonnöten ist.

Bei einer vorteilhaften Weiterbildung der Erfindung ist das optische Element eine Linse oder ein Teil einer Frontscheibe. In den Strahlengang des Lichtsenders und des Lichtempfängers wird in der Regel als optisches Element wenigstens eine Linse zur Bündelung des ausgesandten bzw. einfallenden Lichtes und eine Frontscheibe zur Abdeckung des Gehäuses, in welchem die für die Reflexionslichtschranke nötigen Komponenten angeordnet sind, angeordnet. Die Polarisationsfilter können daher entweder mit der Linse oder mit der Frontscheibe bzw. einem Teil der Frontscheibe zu einem zu montierenden Element verbunden werden.

Vorteilhafterweise stehen die Polarisationsebenen der beiden Polarisationsfilter senkrecht zueinander, da dies eine besonders einfache Ausgestaltung des Reflektors und eine einfache Montage der Polarisationsfilter erlaubt.

Bei einer bevorzugten Weiterbildung der Erfindung ist wenigstens eines der beiden Polarisationsfilter als Polarisationsfolie, vorzugsweise mit einer Dicke von 0,1 mm bis 0,5 mm, ausgebildet. Diese eignen sich besonders gut zum Hinterspritzen mit einem optisch transparenten Material.

Vorteilhafterweise ist das optisch transparente Material ein Kunststoff, vorzugsweise ein leicht fließender Kunststoff. Diese Materialien eignen sich besonders gut zur Verwendung in einem spitzgussverfahren.

Die Erfindung wird anhand der nachfolgenden Figuren in Ausführungsbeispielen erläutert. Es zeigt
- Figur 1: eine schematische Darstellung eines ersten Ausführungsbeispiels einer Reflexionslichtschranke gemäß der Erfindung,
- Figur 2: eine schematische Darstellung eines zweiten Ausführungsbeispiels einer Reflexionslichtschranke gemäß der Erfindung
- Figur 3a: ein Schnitt durch zwei in ein Spritzgussteil integrierte Polarisationsfilter, wobei das Spritzgussteil zwei Linsen bildet und

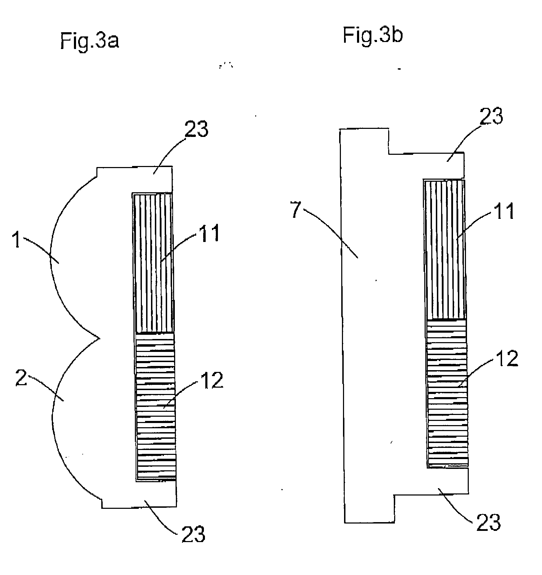

- Figur 3a: ein Schnitt durch zwei in ein Spritzgussteil integrierte Polarisationsfilter, wobei das Spritzgussteil eine Frontscheibe bildet.

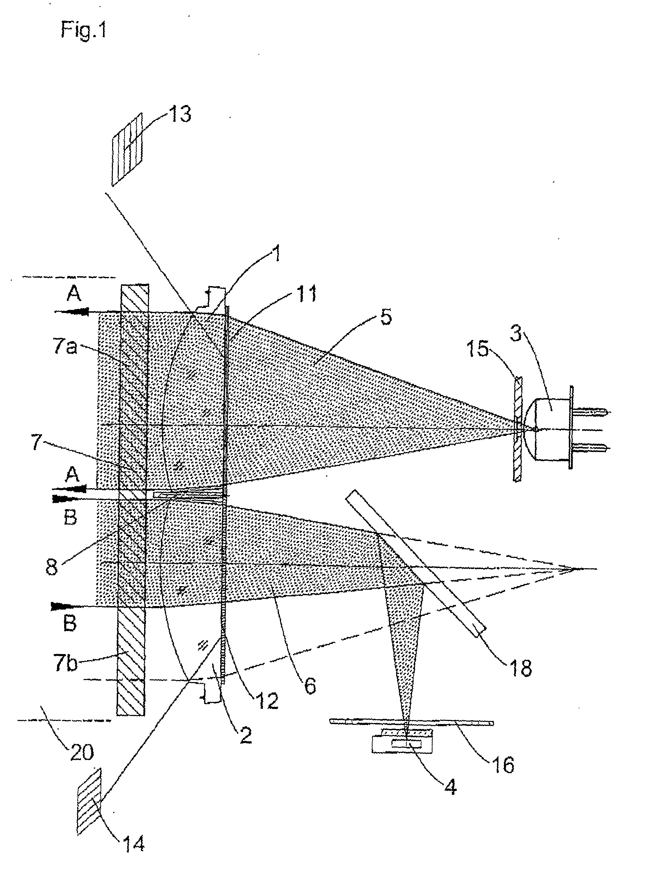

Die Figur 1 zeigt eine an einer Seite eines durch gestrichelte Linien angedeuteten Überwachungsbereichs 20 einer Reflexionslichtschranke angeordnete Vorrichtung mit einem Lichtsender 3, welcher beispielsweise aus einer Leuchtdiode besteht, und welcher ein Strahlenbündel 5 aussendet. Dieses ausgesandte Strahlenbündel 5 passiert zunächst eine vor dem Lichtsender 3 angeordnete Blende 15. Das ausgesandte Strahlenbündel 5 wird in einer Linse 1 gebündelt und tritt als paralleles Strahlenbündel durch eine Frontscheibe 7 aus der Vorrichtung aus. Die Laufrichtung des ausgesandten Strahlenbündels 5 ist durch die Pfeile A angegeben. Das ausgesandte Strahlenbündel 5 durchquert den Überwachungsbereich 20 und wird an einem nicht dargestellten Reflektor in ein einfallendes Strahlenbündel 6 reflektiert, welches den Überwachungsbereich 20 in umgekehrter Richtung zu dem ausgesandten Strahlenbündel 5 durchquert. Die Laufrichtung des einfallenden Strahlenbündels 6 ist durch die Pfeile B angegeben. Das einfallende Strahlenbündel 6 tritt durch die Frontscheibe 7 in die Vorrichtung ein und wird durch eine weitere Linse 2 auf einen Lichtempfänger 4 fokussiert. Zwischen der Linse 2 und dem Lichtempfänger 4 ist ein Umlenkspiegel 18 angeordnet, welcher das einfallende Strahlenbündel 6 beispielsweise um 90° umlenkt, um den Lichtempfänger und die nachgeschaltete, nicht dargestellte Auswerteelektronik räumlich getrennt von dem Lichtsender 3 anordnen zu können. Vor dem Lichtempfänger 4 ist eine weitere Blende 16 angeordnet, um Streustrahlung ausblenden zu können. Solange der Lichtempfänger 4 das einfallende Strahlenbündel 6 detektiert zeigt die Lichtschranke an, dass sich kein Gegenstand in dem Überwachungsbereich 20 der Reflexionslichtschranke befindet.

Um auch das Eindringen von reflektierenden Gegenständen in den Überwachungsbereich 20 detektieren zu können, ist zwischen dem Lichtsender 3 und der Linse 1 ein erstes Polarisationsfilter 11 und zwischen der Linse 2 und dem Lichtempfänger 4 ein zweites Polarisationsfilter 12 angeordnet.

Die Linsen 1, 2 sind dabei durch Hinterspritzen der Polarisationsfilter 11, 12 im Spritzgussverfahren hergestellt. Dazu werden die Polarisationsfilter 11, 12 in ein Werkzeug eingelegt und mit einem optisch transparenten Material hinter- und/oder umspritzt. Bevorzugt wird ein Kunststoff, insbesondere ein leicht fließender Kunststoff, beispielsweise PMMA, als optisch transparentes Material verwendet, da dieses Material zur Verwendung in der Spritzgusstechnik besonders geeignet ist.

Die Polarisationsfilter 11, 12 sind bevorzugt als Polarisationsfolien ausgebildet, welche vorzugsweise eine Dicke von 0,1 mm bis 0,5 mm aufweisen. Polarisationsfolien sind besonders preisgünstig. Die erforderliche mechanische Festigkeit erhalten sie durch den Verbund mit dem hinterspritzten Kunststoff.

Durch das Hinterspritzen der Polarisationsfilter 11, 12 liegen die Polarisationsfilter 11, 12 direkt auf den Linsen 1, 2 auf. Die beiden Linsen 1, 2 gemäß dem in Figur 1 dargestellten Ausführungsbeispiel sind durch einen Trennsteg 8 getrennt. Bevorzugt werden die beiden Polarisationsfilter 11, 12 gemeinsam hinterspritzt, wie in Figur 3a dargestellt, wobei die beiden Linsen 1, 2 in demselben Spritzgussteil ausgeformt und somit in einer definierten Ausrichtung zueinander stehen. Dabei werden auch die beiden Polarisationsfilter 11, 12 in ihrer Ausrichtung zueinander fixiert, wodurch einerseits die Montage der Polarisationsfilter 11, 12 und der Linsen 1, 2 deutlich vereinfacht wird. Andererseits wird dadurch auch die Ausrichtung der Polarisationsebenen 13, 14 der Polarisationsfilter 11, 12 zueinander fixiert, welche gegeneinander gekreuzt, vorzugsweise um 90° gegeneinander verdreht sind. Zunächst wird durch die gemeinsame Umspritzung der Polarisationsfilter 11, 12 der Montageprozess deutlich vereinfacht, da keine manuelle Ausrichtung der Polarisationsfilter 11, 12 mehr nötig ist.

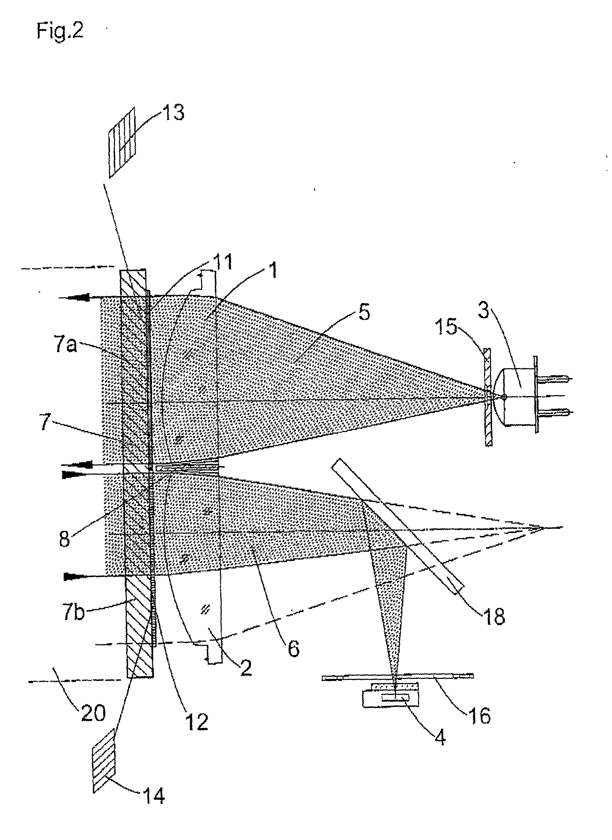

In Figur 2 ist eine alternative Ausführungsform einer Reflexionsschranke gezeigt. Gleiche Bezugsziffern bezeichnen gleiche Teile wie gemäß dem Ausführungsbeispiel der Figur 1. Das in Figur 2 gezeigte zweite Ausführungsbeispiel einer Reflexionalichtschranke unterscheidet sich von dem in Figur 1 dargestellten Ausführungsbeispiel nur dadurch, dass das erste und das zweite Polarisationsfilter 11, 12 nicht mit dem optisch transparenten Material, welches die Linsen 1, 2 bildet, sondern mit dem optische transparenten Material, welches die Frontscheibe 7 bildet, hinterspritzt ist. Dadurch sind die Polarisationsfilter 11, 12 direkt auf der Frontscheibe 7 angeordnet und decken jeweils einen unterschiedlichen Teil 7a, 7b der Frontscheibe ab. Die Funktionsweise der Reflexionslichtschranke ändert sich dadurch nicht. Die beiden Polarisationsfilter 11, 12 werden gemeinsam hinterspritzt und somit in die Frontscheibe 7 integriert, wodurch die relative Lage der Polarisationsfilter 11, 12 und somit auch der Polarisationsebenen 13, 14 zueinander fixiert ist.

Um die feuchtigkeitsempfindlichen Kanten der Polarisationsfilter 11, 12 zu schützen, werden bevorzugt die Polarisationsfilter 11, 12 nicht nur hinter-, sondern zusätzlich auch umspritzt. In den Figuren 3a und 3b sind schematisch derartig umspritzte Polarisationsfilter 11, 12 dargestellt. Figur 3a zeigt ein Ausführungsbeispiel, in welchem das hinterspritzte Material die Linsen 1, 2 analog zum Ausführungsbeispiel in Figur 1 bildet, während bei dem in Figur 3b dargestellten Ausführungsbeispiel das hinterspritzte Material die Frontscheibe 7 analog zum Ausführungsbeispiel gemäß Figur 2 bildet. Beim Umspritzen der Polarisationsfilter 11, 12 wird zusätzlich ein Rand 23 angeformt, welcher die Kanten der Polarisationsfilter 11, 12 umschließt, um diese gegen Beschädigungen durch Stöße und insbesondere das Eindringen von Feuchtigkeit zu schützen.

### Bezugszeichenliste

- 1: Linse
- 2: Linse
- 3: Lichtsender
- 4: Lichtempfänger
- 5: ausgesandtes Strahlenbündel
- 6: einfallendes Strahlenbündel
- 7: Frontscheibe
- 7a: Teil der Frontscheibe
- 7b: Teil der Frontscheibe
- 8: Trennsteg
- 11: erstes Polarisationsfilter
- 12: zweites Polarisationsfilter
- 13: Polarisationsebene des ersten Polarisationsfilters
- 14: Polarisationsebene des zweiten Polarisationsfilters
- 15: Blende
- 16: Blende
- 18: Umlenkspiegel
- 20: Überwachungsbereich
- 23: Rand

- A: Laufrichtung des ausgesandten Strahlenbündels
- B: Laufrichtung des einfallenden Strahlenbündels

## Patentansprüche

1. Reflexionslichtschranke mit einem an einer Seite ihres Überwachungsbereichs angeordneten Lichtsender (3), einem am der gleichen Seite Ende angeordneten Lichtempfänger (4) und einem an der anderen Seite des Überwachungsbereichs angeordneten Reflektor, welcher den Polarisationszustand des Lichtes bei Reflexion ändert, wobei sowohl zwischen dem Lichtsender (3) und dem Reflektor als auch zwischen dem Lichtempfänger (4) wenigstens ein optisches Element (1, 2, 7, 7a, 7b) und ein Polarisationsfilter (11, 12) angeordnet sind, und wobei die Polarisationsebenen (13, 14) der beiden Polarisationsfilter (11, 12) gegeneinander gekreuzt sind,
**dadurch gekennzeichnet, dass** wenigstens eines der beiden Polarisationsfilter (11, 12) mit optisch transparentem Material um- und/oder hinterspritzt ist, wobei das optisch transparente Material das wenigstens eine optische Element (1, 2, 7, 7a, 7b) bildet.

2. Reflexionslichtschranke nach Anspruch 1,
**dadurch gekennzeichnet, dass** beide Polarisationsfilter (11, 12) mit optisch transparentem Material um- und/oder hinterspritzt sind.

3. Reflexionslichtschranke nach Anspruch 1 oder 2,
**dadurch gekennzeichnet, dass** beide Polarisationsfilter (11, 12) gemeinsam mit optisch transparentem Material um- und/oder hinterspritzt sind.

4. Reflexionslichtschranke nach einem der vorhergehenden Ansprüche,
**dadurch gekennzeichnet, dass** das optische Element eine Linse (1, 2) oder zumindest ein Teil einer Frontscheibe (7, 7a, 7b) ist.

5. Reflexionslichtschranke nach einem der vorhergehenden Ansprüche,
**dadurch gekennzeichnet, dass** die Polarisationsebenen (13, 14) der beiden Polarisationsfilter (11, 12) senkrecht zueinander stehen.

6. Reflexionslichtschranke nach einem der vorhergehenden Ansprüche,
**dadurch gekennzeichnet, dass** wenigstens eines der beiden Polarisationsfilter (11, 12) als Polarisationsfolie ausgebildet ist.

7. Reflexionslichtschranke nach Anspruch 6,
**dadurch gekennzeichnet, dass** die Polarisationsfolie eine Dicke von 0,1 mm bis 0,5 mm aufweist.

8. Reflexionslichtschranke nach einem der vorhergehenden Ansprüche,
**dadurch gekennzeichnet, dass** das optisch transparente Material ein Kunststoff, vorzugsweise ein leicht fließender Kunststoff ist.
